# EUROPÄISCHE PATENTANMELDUNG

(11) **EP 1 927 613 A1**
(43) Veröffentlichungstag der Anmeldung: **04.06.2008**
(21) Anmeldenummer: 07014561.0
(22) Anmeldetag: 25.07.2007
(51) Int. Cl.: C08G 65/32

(54) **Verfahren zur Verbesserung der Farbqualität bei der Herstellung von Polyoxyalkylenglykoldialkylethern in Gegenwart von Luftsauerstoff**

(30) Priorität: 01.12.2006 DE 102006056756
(71) Anmelder: Clariant International Ltd., 4132 Muttenz (CH)
(72) Erfinder: Snell, Alexander, Dr., 4055 Basel (CH); Holzhauser, Erwin, 84140 Ganghofen (DE)
(74) Vertreter: Mikulecky, Klaus

(57) **Zusammenfassung**

Gegenstand vorliegender Erfindung ist ein Verfahren zur Umsetzung freier Hydroxylgruppen von Polyoxyalkylenglykolen und/oder Polyoxyalkylenglykolmonoethern, indem man mindestens ein Polyoxyalkylenglykol oder mindestens einen Polyoxyalkylenglykolmonoether mit einer Base umsetzt, und anschließend mit einem Halogenkohlenwasserstoff oder Säurehalogenid in Gegenwart eines Reduktionsmittels alkyliert oder acyliert, wobei die Alkylierungs- oder Acylierungsreaktion in Gegenwart von Luftsauerstoff durchgeführt wird.

## Beschreibung

Die vorliegende Erfindung betrifft die Verwendung von Reduktionsmitteln zur Verbesserung der Farbqualität bei der Herstellung von Polyoxyalkylenglykoldialkylethern in Gegenwart von Luftsauerstoff.

Die Veretherung von freien OH-Gruppen in Polyoxyalkylenglykolen erfolgt großtechnisch im Allgemeinen nach der Synthese von Williamson (K. Weissermel, H. J. Arpe "Industrielle Organische Chemie", 1998, Seite 179) durch Umsetzung eines Polyoxyalkylenglykols R-OH mit Natriumhydroxid (oder analog mit Natrium) zum entsprechenden Alkoholat und anschließender Alkylierung mit einem Alkylchlorid R¹-Cl gemäß folgender Reaktionsgleichungen:

R¹-OH + NaOH → R¹-ONa + H₂O (I)

R¹-ONa + CI-R → R¹-O-R + NaCl (II)

Da insbesondere das *in situ* gebildete Alkoholat gem. Formel (I) sehr luftempfindlich ist, kommt es bei der Herstellung von Polyoxyalkylenglykolethern unter Zutritt von Luftsauerstoff oftmals zu unerwünschten Oxidationen. Dadurch entstehen Aldehyde und andere Oxidationsprodukte, die eine Verfärbung des Produktes verursachen. Um die vom Kunden gewünschte hohe Farbqualität (also eine niedrige Farbzahl) zu erreichen, sind zusätzliche zeit- und kostenaufwendige Maßnahmen in Form von Bleichen mit Sauerstoff oder Peroxiden erforderlich. Dies schädigt unter Umständen aber das Produkt, insbesondere bei Polyoxyalkylenglykolallylethern.

Aufgabe der vorliegenden Erfindung war es daher, ein Verfahren bereitzustellen, mit dem Polyoxyalkylenglykolether, insbesondere Allylether, auch unter Zutritt von Luftsauerstoff mit niedriger Farbzahl hergestellt werden können.

Überraschenderweise wurde gefunden, dass durch den Zusatz von Reduktionsmitteln während der Umsetzung niedrige Farbzahlen erreicht werden.

Gegenstand der Erfindung ist ein Verfahren zur Umsetzung freier Hydroxylgruppen von Polyoxyalkylenglykolen und/oder Polyoxyalkylenglykolmonoethern, indem man mindestens ein Polyoxyalkylenglykol oder mindestens einen Polyoxyalkylenglykolmonoether mit einer Base umsetzt, und anschließend mit einem Halogenkohlenwasserstoff oder Säurehalogenid in Gegenwart eines Reduktionsmittels alkyliert oder acyliert, wobei die Alkylierungs- oder Acylierungsreaktion in Gegenwart von Luftsauerstoff durchgeführt wird.

Die mit dem erfindungsgemäßen Verfahren herstellbaren Produkte entsprechen vorzugsweise der Formel 1

R-O-(AO)_{y}-R¹ (1)

worin
- R: Wasserstoff, eine Kohlenwasserstoffgruppe mit 1 bis 24 Kohlenstoffatomen, oder eine Gruppe R*-C(O)-, wobei R* eine Kohlenwasserstoffgruppe mit 1 bis 24 Kohlenstoffatomen ist,
- R¹: eine Kohlenwasserstoffgruppe mit 1 bis 24 Kohlenstoffatomen,
- AO: eine Alkoxygruppe, und
- y: eine Zahl von 1 bis 200 bedeuten.

Das erfindungsgemäße Verfahren geht vorzugsweise von Edukten der Formel 2

H-O-(AO)_{y}-H (2)

oder von Edukten der Formel 3

H-O-(AO)_{y}-R¹ (3)

aus.

Alternativ zur Alkylierung mit einem Halogenkohlenwasserstoff (der Begriff der Alkylierung umfasst vorliegend auch die Einbringung anderer als Alkylreste, beispielsweise auch von Allylresten) kann im erfindungsgemäßen Verfahren eine Acylierung mit einem Säurehalogenid der Formel (4)

R*-CO-Hal (4)

oder der entsprechenden freien Säure durchgeführt werden, wodurch anstatt der beschriebenen Ether die Ester entstehen.
y steht vorzugsweise für eine Zahl von 2 bis 100, insbesondere 3 bis 50.

R kann aliphatischer oder aromatischer Natur sein. R kann gesättigt oder ungesättigt sein. Beispiele für R sind Alkylgruppen mit 1 bis 24 Kohlenstoffatomen, Alkenylgruppen mit 2 bis 24 Kohlenstoffatomen, Phenyl-, Benzyl-, Vinyl- und Allylgruppen. Vorzugsweise umfasst R 1 bis 18, insbesondere 2 bis 4 Kohlenstoffatome.

Steht in Formel 1 R für eine Kohlenwasserstoffgruppe mit 1 bis 24 Kohlenstoffatomen, so handelt es sich bei diesen Verbindungen um Polyoxyalkylenglykoldiether, die durch Alkylierung von Alkoxylaten von Monoalkoholen mit 1 bis 24, vorzugsweise 2 bis 4 Kohlenstoffatomen erhältlich sind, wobei R¹ 1 bis 24, vorzugsweise 2 bis 4 Kohlenstoffatome umfasst.

Steht in Formel 1 R für eine Gruppe R*-C(O)-, wobei R* eine Kohlenwasserstoffgruppe mit 1 bis 24 Kohlenstoffatomen, vorzugsweise 2 bis 4 Kohlenstoffatomen ist, so handelt es sich bei diesen Verbindungen um Polyoxyalkylenglykolester, die durch Acylierung von Alkoxylaten von Monoalkoholen mit 1 bis 24, vorzugsweise 2 bis 4 Kohlenstoffatomen erhältlich sind.

Der in dieser Anmeldung verwendete Begriff des Polyalkylenglykolethers soll die Ester mitumfassen, sofern nicht ausdrücklich anders festgelegt. Der Begriff der Kohlenwasserstoffgruppe bezeichnet vorliegend eine Gruppe, die nur aus Kohlenstoff und Wasserstoff besteht.

R¹ steht vorzugsweise für einen Rest, der aus Kohlenwasserstoffhalogeniden mit 1 bis 24, vorzugsweise 2 bis 4 Kohlenstoffatomen durch Abstraktion des Halogenatoms abgeleitet ist. R¹ kann aliphatischer oder aromatischer Natur sein. R¹ kann gesättigt oder ungesättigt sein. Beispiele für R¹ sind Alkylgruppen mit 1 bis 12 Kohlenstoffatomen, Alkenylgruppen mit 2 bis 12 Kohlenstoffatomen, Phenyl, Benzyl, Vinyl, Allyl.

AO steht für eine einheitliche oder eine gemischte Alkoxygruppe, die statistisch oder blockweise angeordnet sein kann, und die Ethoxy-, Propoxy- und/oder Butoxygruppen umfassen kann.

Die erfindungsgemäßen Polyoxyalkylenglykolether werden durch Umsetzung mit einer Base und anschließender Alkylierung mit einem Halogenalkan in Gegenwart von Luftsauerstoff und einem Reduktionsmittel hergestellt.

Als Basen kommen in erster Linie die Oxide, Hydroxide und Carbonate der Alkali-/und oder Erdalkalimetalle in Betracht. Typische Beispiele sind Lithiumhydroxid, Natriumcarbonat, Calciumoxid oder Calciumhydroxid. Bevorzugt ist der Einsatz von Natriumhydroxid und/oder Kaliumhydroxid.

Das Kohlenwasserstoffhalogenid ist das Alkylierungsmittel. Bevorzugte Halogenide sind Chloride.

Als Reduktionsmittel finden Borhydride der Formeln BH₄, MBH₃R², MBH₂(R²)₂, MBH(R²)₃ und Aluminiumhydride der Formeln AIH₄, MAIH₃R², MAIH₂(R²)₂, MAIH(R²)₃ Anwendung, worin M für ein Alkalimetallion wie beispielsweise Lithium, Natrium oder Kalium und R² für CN oder (OCₙH₂ₙ₊₁)ₘ mit n = 1-5 und m = 1-4 steht.

Weiterer Gegenstand der Erfindung ist die Verwendung mindestens eines Reduktionsmittels zur Verbesserung der Farbqualität des Reaktionsprodukts der Umsetzung freier Hydroxylgruppen von Polyoxyalkylenglykolmonoethern, indem man mindestens ein Polyoxyalkylenglykol oder mindestens einen Polyoxyalkylenglykolmonoether mit einer Base umsetzt, und anschließend mit mindestens einem Halogenkohlenwasserstoff oder Säurehalogenid in Gegenwart eines Reduktionsmittels alkyliert oder acyliert, wobei die Alkylierungs- oder Acylierungsreaktion in Gegenwart von Luftsauerstoff durchgeführt wird.

Der Gehalt der mit dem Reaktionsmedium in Berührung befindlichen Gasphase an Luftsauerstoff während der Alkylierungs- oder Acylierungsreaktion liegt im erfindungsgemäßen Verfahren zwischen 0,001 und 20 Vol.-%, insbesondere zwischen 0,01 und 10 Vol.-%, speziell zwischen 0,1 und 1 Vol.-%.

Eine Verbesserung der Farbqualität nach dem erfindungsgemäßen Verfahren ist anzunehmen, wenn die Hazen-Farbzahl des erhaltenen Verfahrensprodukts unterhalb von 500, vorzugsweise unterhalb von 250, insbesondere unterhalb von 150 liegt.

Das erfindungsgemäße Verfahren wird nun an einigen Beispielen noch näher erläutert:

### Beispiel 1:

Herstellung von Polyethylenglykoldiallylether mit Natriumborhydrid
In einen Rührreaktor mit Temperatur- und Drucküberwachung wurde eine Mischung aus 250,0 g (0,52 mol) eines Polyethylenglykolallylethers mit einer mittleren Molmasse von 500 g/mol und 0,125 g (0,003 mol) Natriumborhydrid bei 60°C unter Rühren mit 31,3 g (0,78 mol) Natriumhydroxid versetzt. Anschließend wurden 59,8 g (0,78 mol) Allylchlorid zugetropft. Der Reaktor wurde zur Nachreaktion auf 80°C erhitzt und noch 2 Stunden bei dieser Temperatur gerührt. Anschließend wurde überschüssiges Allylchlorid abdestilliert. Unter Rühren wurde nun genau die Menge Wasser zugegeben, die erforderlich war, um die Kochsalzmenge in Lösung zu bringen. Nach anschließender Phasentrennung, Neutralisation, Entwässerung und Filtration wurde das Produkt mit einer Hazen-Farbzahl von 85 isoliert.

### Beispiel 2 (Vergleich):

Herstellung von Polyethylenglykoldiallylether ohne Natriumborhydrid
Durchführung in Analogie zu Beispiel 1, jedoch ohne Zugabe von Natriumborhydrid. Es wurde ein Produkt mit einer Hazen-Farbzahl von >> 1000 (Iodfarbzahl: 16,1) isoliert.

### Beispiel 3:

Herstellung von Polyethylenglykolallylmethylether mit Natriumborhydrid
In einen Rührreaktor mit Temperatur- und Drucküberwachung wurde eine Mischung aus 253,5 g (1,11 mol) eines Polyethylenglykolallylethers mit einer mittleren Molmasse von 230 g/mol und 0,125 g (0,003 mol) Natriumborhydrid bei 50°C unter Rühren mit 66,9 g (1,67 mol) Natriumhydroxid versetzt. Anschließend wurden 61,1 g (1,21 mol) Methylchlorid binnen einer Stunde zugegast. Der Reaktor wurde zur Nachreaktion auf 80°C erhitzt und noch 4 Stunden bei dieser Temperatur gerührt. Anschließend wurde überschüssiges Methylchlorid abdestilliert. Unter Rühren wurde nun genau die Menge Wasser zugegeben, die erforderlich war, um die Kochsalzmenge in Lösung zu bringen. Nach anschließender Phasentrennung, Neutralisation, Entwässerung und Filtration wurde ein Produkt mit einer Hazen-Farbzahl von 20 isoliert.

### Beispiel 4 (Vergleich):

Herstellung von Polyethylenglykolallylmethylether ohne Natriumborhydrid Durchführung in Analogie zu Beispiel 3, jedoch ohne Zugabe von Natriumborhydrid.
Es wurde ein Produkt mit einer Hazen-Farbzahl von >> 1000 (Iodfarbzahl: 33,6) isoliert.

### Beispiel 5:

Herstellung von Polyethylenglykoldimethylether mit Natriumborhydrid
In einen Rührreaktor mit Temperatur- und Drucküberwachung wurde eine Mischung aus 200,0 g (0,7 mol) eines Polyethylenglykolmethylethers mit einer mittleren Molmasse von 280 g/mol und 0,200 g (0,005 mol) Natriumborhydrid bei 50°C unter Rühren mit 41,9 g (1,05 mol) Natriumhydroxid versetzt. Anschließend wurden 43,9 g (0,87 mol) Methylchlorid binnen einer Stunde zugegast. Der Reaktor wurde zur Nachreaktion auf 80°C erhitzt und noch 4 Stunden bei dieser Temperatur gerührt. Anschließend wurde überschüssiges Methylchlorid abdestilliert. Unter Rühren wurde nun genau die Menge Wasser zugegeben, die erforderlich war, um die Kochsalzmenge in Lösung zu bringen. Nach anschließender Phasentrennung, Neutralisation, Entwässerung und Filtration wurde ein Produkt mit einer Hazen-Farbzahl von 105 isoliert.

### Beispiel 6 (Vergleich):

Herstellung von Polyethylenglykoldimethylether ohne Natriumborhydrid Durchführung in Analogie zu Beispiel 5, jedoch ohne Zugabe von Natriumborhydrid.
Es wurde ein Produkt mit einer Hazen-Farbzahl von >> 1000 (Iodfarbzahl: 24,8) isoliert.

## Patentansprüche

1. Verfahren zur Umsetzung freier Hydroxylgruppen von Polyoxyalkylenglykolen und/oder Polyoxyalkylenglykolmonoethern, indem man mindestens ein Polyoxyalkylenglykol oder mindestens einen Polyoxyalkylenglykolmonoether mit einer Base umsetzt, und anschließend mit mindestens einem Halogenkohlenwasserstoff oder Säurehalogenid in Gegenwart eines Reduktionsmittels alkyliert oder acyliert, wobei die Alkylierungs- oder Acylierungsreaktion in Gegenwart von Luftsauerstoff durchgeführt wird.

2. Verfahren nach Anspruch 1, worin der Gehalt der überstehenden Gasphase an Luftsauerstoff während der Alkylierungs- oder Acylierungsreaktion zwischen 0,001 und 20 Vol.-% liegt.

3. Verfahren nach Anspruch 1 und/oder 2, worin das Reaktionsprodukt eine Hazen-Farbzahl von weniger als 500 aufweist.

4. Verfahren nach einem oder mehreren der Ansprüche 1 bis 3, worin das Reaktionsprodukt der Formel 1 entspricht
R-O-(AO)_{y}-R¹ (1)
worin
R Wasserstoff, eine Kohlenwasserstoffgruppe mit 1 bis 24 Kohlenstoffatomen, oder eine Gruppe R*-C(O)-,
R* eine Kohlenwasserstoffgruppe mit 1 bis 24 Kohlenstoffatomen,
R¹ eine Kohlenwasserstoffgruppe mit 1 bis 24 Kohlenstoffatomen,
AO eine Alkoxygruppe, und
y eine Zahl von 1 bis 200 bedeuten.

5. Verfahren nach einem oder mehreren der Ansprüche 1 bis 4, worin von Edukten der Formel 2
H-O-(AO)_{y}-H (2)
oder von Edukten der Formel 3
H-O-(AO)_{y}-R¹ (3)
ausgegangen wird, worin
R¹ eine Kohlenwasserstoffgruppe mit 1 bis 24 Kohlenstoffatomen,
AO eine Alkoxygruppe, und
y eine Zahl von 1 bis 200 bedeuten.

6. Verfahren nach einem oder mehreren der Ansprüche 4 oder 5, worin y für eine Zahl von 2 bis 100 steht.

7. Verfahren nach einem oder mehreren der Ansprüche 4 oder 5, worin R¹ für einen Kohlenwasserstoffrest mit 2 bis 4 C-Atomen steht.

8. Verfahren nach einem oder mehreren der Ansprüche 1 bis 7, worin das Reduktionsmittel aus Borhydriden der Formeln BH₄, MBH₃R², MBH₂(R²)₂, MBH(R²)₃ und Aluminiumhydriden der Formeln AIH₄, MAIH₃R², MAIH₂(R²)₂, MAIH(R²)₃ ausgewählt ist, worin M für ein Alkalimetallion wie beispielsweise Lithium, Natrium oder Kalium und R² für CN oder (OCₙH₂ₙ₊₁)ₘ mit n = 1-5 und m = 1-4 stehen.

9. Verwendung mindestens eines Reduktionsmittels zur Verbesserung der Farbqualität des Reaktionsprodukts der Umsetzung freier Hydroxylgruppen von Polyoxyalkylenglykolmonoethern, indem man mindestens ein Polyoxyalkylenglykol oder mindestens einen Polyoxyalkylenglykolmonoether mit einer Base umsetzt, und anschließend mit mindestens einem Halogenkohlenwasserstoff oder Säurehalogenid in Gegenwart eines Reduktionsmittels alkyliert oder acyliert, wobei die Alkylierungs- oder Acylierungsreaktion in Gegenwart von Luftsauerstoff durchgeführt wird.
